# EUROPEAN PATENT SPECIFICATION

(11) **EP 1 579 327 B1**
(45) Date of publication and mention of the grant of the patent: **02.05.2007**
(21) Application number: 03813693.3
(22) Date of filing: 12.12.2003
(51) Int. Cl.: G06F 11/14, G06F 13/00, G11B 7/00

(54) **PRE-CONFIGURED BACKUP DVD-RWS**
BACKUP-DVD-RWS MIT VORKONFIGURATION
DVD REENREGISTRABLES PRECONFIGURES

(30) Priority: 20.12.2002 US 435241 P
(43) Date of publication of application: 28.09.2005
(73) Proprietor: Koninklijke Philips Electronics N.V., 5621 BA Eindhoven (NL)
(72) Inventor: BODLAENDER, Maarten, P., NL-5600 AE Eindhoven (NL)
(74) Representative: Groenendaal, Antonius W. M.
(86) International application number: PCT/IB2003/006049
(87) International publication number: WO 2004/057474

(56) References cited:
- EP-A- 1 168 174
- US-A- 5 758 067
- US-A- 5 954 805
- US-A1- 2002 046 215
- US-A1- 2002 141 741
- PATENT ABSTRACTS OF JAPAN vol. 1999, no. 01, 29 January 1999 (1999-01-29) & JP 10 269031 A (HITACHI LTD; HITACHI INF TECHNOL:KK), 9 October 1998 (1998-10-09)

## Description

The invention relates to computer and media systems and more particularly to systems and methods for providing computer system data and media archiving.

Computer systems have become a ubiquitous feature of many homes and businesses. As personal computers gain wider acceptance in homes, many companies seek to integrate computers into a wider array of integrated devices that include computing, video and music capabilities. An integrated media system may augment or replace several devices that provide media such as Internet devices, video and audio replay and storage devices, telephones and computers.

Personal computers have utilized various schemes for backing up files. Various systems used for backup include external tape drives, networks with server computers configured to backup files and programs for timed backup to a hard drive.

US-A-5,954,805 describes a computer for auto-running a program resident upon a disc when the disc is placed into the disc player.

US-A-2002/141,741 describes a disc having a auto-run playback program for presenting the content of the disc when introduced into the disc drive.

US-A-2002/46,215 describes a DVD archiving system where data are archived on DVDs and every DVD comprises index and identification data of the content and the DVD may comprise a program files, like an image player.

US-A-5,758,067 describes an archiving system. The archiving/backup program has to be configured by the user. Automatic backup is performed during a defined timing cycle (e.g. daily, weekly) onto a magnetic tape.

JP-A-10,269,031 describes backing up a hard disc drive, the drive comprising an executable program module which is activated automatically when a second hard disc is connected. The first hard disc is backed up onto the second hard disc by this program module.

EP-A-1,168,174 describes a backup procedure where the backup data are written onto a disc (CD) comprising an executable program to make a bootable disc. Thus, the backup data can be restored in an easy way.

However, some of the foregoing systems requires the installation, configuration and maintenance of a dedicated back-up program on a computer. Indeed, one of the more frustrating endeavours for a home computer user is the installation and configuration of various safety programs such as virus scans, firewalls and backup programs. Typically, such backup mechanisms indiscriminately backup an entire hard-disk, while a typical consumer is only interested in safeguarding specific content on the disk, rather than generic files such as, for example, operating system files.
Additionally, many computer backup programs operate very slowly due to allowable transfer rates and storage device limitations. Furthermore, very high capacity hard disc drives are becoming common, further burdening the task of performing a computer backup operation. It would be desirable to provide a system and method for archiving data that overcomes these and other limitations.

A method of archiving data in a computer to a high-density optical backup disc is provided. The method provides for reading an executable command from a back-up disc, determining data to be stored to the back-up disc responsive to the executable command, transferring the determined data to the backup disc for storing the determined data to the back-up disc and identifying the stored data.

The invention also provides a computer readable high-density optical back-up disc containing a computer program comprising computer readable codes for carrying out the method above.

The invention further provides a system for archiving data in a computer to a high-density optical backup disc. The system includes means for reading an executable command from a back-up disc; means for determining data to be stored to the back-up disc responsive to the executable command; means for transferring the determined data to the backup disc for storing the determined data to the back-up disc and means for identifying the stored data.

The foregoing and other features and advantages of the invention are apparent from the following detailed description of exemplary embodiments, read in conjunction with the accompanying drawings. The detailed description and drawings are merely illustrative of the invention rather than limiting, the scope of the invention being defined by the appended claims thereof.
FIG. 1 is a block diagram of a preconfigured backup disc;
FIG. 2 is a block diagram illustrating an exemplary computer system that may be used with the invention; and
FIG. 3 is a flow diagram illustrating a process for archiving data in a computer to a high-density optical backup disc.

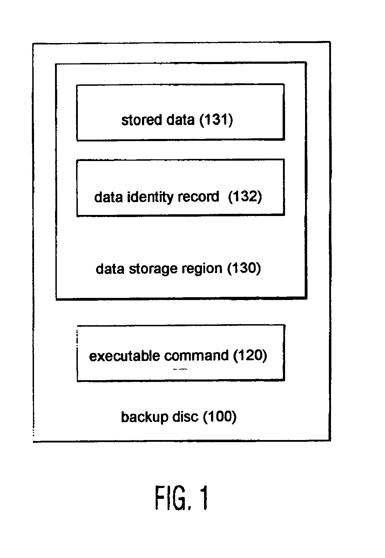

FIG. 1 is a block diagram of a preconfigured backup disc. FIG. 1 shows a backup disc 100 comprising an executable command 120, and a data storage region 130. The data storage region 130 is shown comprising stored data 131, and a data identity record 132.

The backup disc 100 is a single-purpose DVD disc that is configured for use as a self-contained data archiving system for a computer system. The backup DVD 100 is generally fabricated of a recordable DVD disc such as a DVD-R, a DVD-RW, a DVD+RW, or a blue-laser-type recordable DVD disc such as Blu-Ray. Blue laser DVD discs include ultraviolet wavelength and blue-shifted short wavelength DVD discs that utilize a read/write laser wavelength of approximately 550-3 50nm rather than the 650-630nm of first-generation DVDs.

As shown in FIG. 1, the backup disc 100 comprises a data storage region 130, and an executable command. The executable command 120 is a self-executing program instruction set that runs when the backup disc 100 is first inserted into and then read by a compatible DVD drive. The executable command 120 generally includes instructions to a processor. In one embodiment, the executable command is an executable script suitable for parsing. In another embodiment, the executable command is a string recognizable to a program preloaded to a computer. For example, the command 120 may include instructions to transfer data to the backup DVD and to create an identification record of the data copied to the DVD. In one embodiment, the executable command 120 includes instructions for determining a computer system configuration. The executable command 120 may also contain instructions to search a computer for a record of prior backup activity with another backup disc 100. In another embodiment, the executable command 120 contains instructions to determine whether the backup disc has enough capacity to hold all of the data that will be transferred to the backup disc 100 during a backup operation. The executable command 120 is a complete instruction set that does not require a permanent installation to a computer to provide complete functionality. In one embodiment, a compression utility is included with the executable command 120 to increase the data capacity of the backup disc 100.

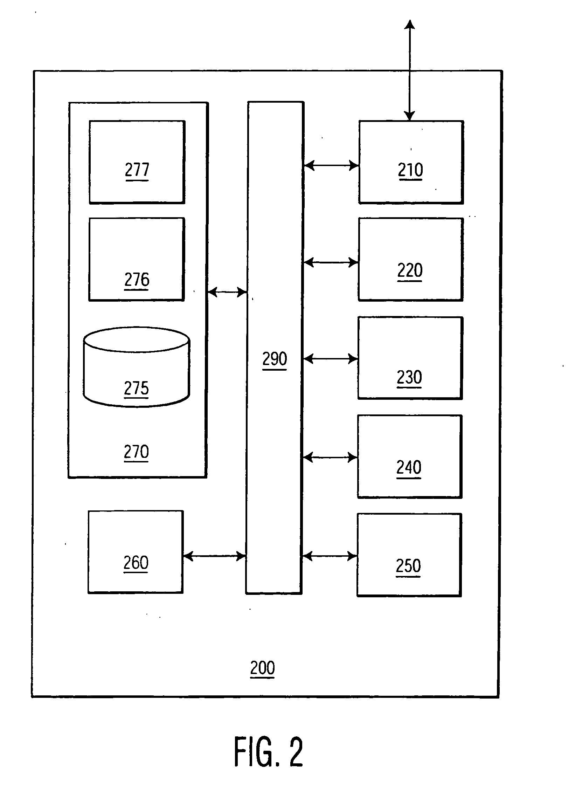

As shown in FIG. 1, the data storage region 130 comprises stored data 131 and a data identity record 132. The data storage region 130 is a writable portion of the DVD that is reserved for data storage. Types of data stored in the data storage region 130 include computer files, media files, stack pointers, data records and the like. The stored data 131 is generally data files transferred from a computer system, such as the computer system 200 described in FIG. 2. The data identity record 132 is generally a file containing information about stored data 131, such as the data origin, data type, data file size and other identifying information. The data identity record 132 provides a record of data that has been transferred from a computer to the data storage region.

The data storage capacity of a DVD disc, particularly a short-wavelength DVD, is very large. Uncompressed data capacities of 50 gigabytes or more for dual-layer or two-sided DVDs is known to those skilled art. In one embodiment, data compression methods are provided to backup an entire computer system with a single backup disc 100 at transfer rates of 36 Megabits/second or more.

FIG. 2 is a block diagram illustrating an exemplary computer system 200 that may be used with the invention. FIG. 2 illustrates a computer system 200 containing an I/O device 210; a processor 220; a user interface 230; memory 240; a display 250; DVD drive 260; a bus 290; and mass storage 270. Mass storage 270 includes database 275, restore program 276 and an operating system 277. In FIG. 2, I/O device 210, processor 220, user interface 230, memory 240, display 250, DVD drive 260 and mass storage 270 are all shown coupled to bus 290. The I/O device 210 is additionally shown enabled for communication external to computer system 200.

The I/O device 210 is a device capable of bidirectional data communication with a device external to the computer system 200. Examples of I/O devices include serial, parallel, USB, Ethernet and IEEE 802.11 compliant wireless devices.

The processor 220 is a computing device usually containing memory and data control capability, such as caching and the like. The processor 220 may be integrated with supporting hardware such as, for example, a video controller, a storage device controller and the like. The processor 220 generally executes instructions of a computer program, for example, instructions for restore program 276, or instruction on a DVD disc such as backup disc 100.

The user interface 230 is a device such as a keyboard, a mouse, a pointing device, a pen, a microphone or another device used to provide a tactile data entry interface with a user of the computer system 200.

The memory 240 is a hardware or virtual storage for computer code and data that the processor is manipulating. Memory 240 includes all dynamic memory external to the processor including video memory, additional cache memory and the like. Portions of mass storage 270 may also be used to provide virtual memory that may be used interchangeably with the memory 240.

The display 250 is a visual display such as a CRT, LCD, plasma or projection display used to provide a user with a visual interface with the computer system 200.

The DVD drive 260 is any writable DVD device that provides a high-density recordable optical medium for storing computer code or data such as a DVD-RAM, DVD-R, DVD-RW, DVD+RW, Blu-Ray and the like.

The mass storage 270 is any device that provides storage for computer code and data such as, for example, a hard disk drive a recordable optical medium and the like. In one embodiment, mass storage 270 is provided by a second computer server system over a network (not shown). The mass storage generally contains the operating system 277, programs such as restore program 276 and may also include database 275. The restore program 276 operates in conjunction with a backup disc to read data from the backup disc and restore damaged or lost files to the computer 200.

The bus 290 is a bidirectional communication device that enables data communication between the various devices of computer system 200. The bus 290 may include a processor and other logic devices to enable multiple data clock speeds and protocols depending upon the connected devices.

In one embodiment, additional components (not shown) are included in computer system 200 to configure the computer system 200 as an integrated media center. Additional components may include a television receiver having analog and digital input and output connections, an audio and video switching and control system, a high-capacity hard-disk drive for digital audio and video data storage, and audio and video amplification, interface, and signal processing components, and the like.

In the following process description, some steps may be combined, performed simultaneously, or in a different order without departing from the invention.

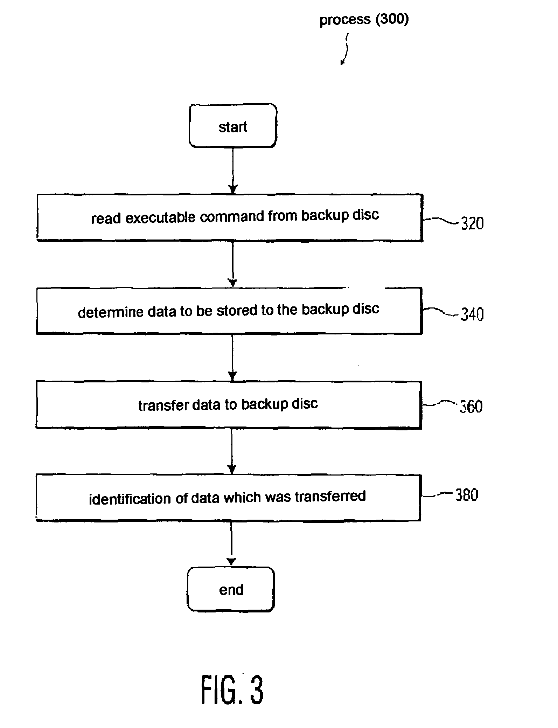

FIG. 3 is a flow diagram illustrating a process for archiving data in a computer to a high-density optical backup disc. Process 300 begins at step 320.
In step 320, an executable command is read from a backup disc such as backup disc 100. The backup disc 100 is read after insertion into a compatible DVD drive of a computer such as computer system 200. The computer system 200 directs the DVD drive 260 to read the executable command 120. Once the executable command 120 is read, the executable command 120 directs the computer processor 220 to execute a series of instruction sets comprising a backup process. Generally, various instruction sets are loaded to the computer memory 240 in order to run various routines. However, the instruction sets are not loaded to mass storage 270, but are run from the backup disc 100. Instruction sets for backup processes are well known to those skilled in the art.

In step 340, data to be stored to the backup disc is determined. Once the executable command 120 is read in step 320, a series of instruction sets executes to determine data to be stored to the backup disc 100. In one embodiment, the data storage components of the computer 200 are determined and all data residing on the storage components are selected for storage to the backup disc 100. In one embodiment, a user is prompted by an instruction set to select data types to be stored. The user selections then determine specific data types to store to the backup disc. The user may be prompted for other options such as data restoration or data access. In yet another embodiment, a user specifies once which file-types to backup. The user preferences are stored in the computer 200 and can be looked for by the command 120 after insertion of the backup disc 100 into a compatible disc drive. In another embodiment, all media files found on the computer are determined for storage. Media files include audio and video data types. In yet another embodiment, all video files found on an integrated media computer 200 are determined for storage. A backup of a dedicated video data hard disc drive using the invention therefore provides a simple media management solution. In one embodiment, all operating system files 277 and associated records and databases found are ignored while other data is determined for storage. In another embodiment, an instruction set searches for a data identity record 131 that has been copied to the computer 200.

In step 360, data is transferred to the backup disc. The transferred data is written to the backup disc by the DVD drive 260. A data compression algorithm may be used during the transfer to increase the data capacity of the backup disc. Data is transferred when it is determined for storage, and transfer of determined data may occur while other data is being determined for storage. Transfer of data is complete when the determined data are all transferred to the backup disc, or the backup disc is full and cannot hold more data. In one embodiment, when a backup disc is determined to be full, the backup disc is ejected. In another embodiment, a user is prompted to insert another backup disc to complete a system backup if a backup disc becomes full. In yet another embodiment, transfer of data resumes after a disc has been ejected and an empty backup disc is inserted into the DVD drive 260. In yet another embodiment, data may be re-ordered for backup, such that a data set does not span multiple discs and discs are as full as possible

In step 380, data transferred to the backup disc is identified. Identification of the transferred data includes information such as the data origin, data type, data file size and status as transferred data. In one embodiment, a data identity record 132 is written to the backup disc as the determined data is transferred to the backup disc in step 360. The data identity record 132 enables a user to insert a disk and retrieve the contents of all earlier disks. In another embodiment, a copy of the data identity record is transferred to a storage device on the computer system 200 when the transfer of determined data is complete.

An example of the system of the invention in use is now provided. An integrated multimedia system is installed in a consumer's home. The integrated console combines audio, video and computing functions into an integrated device. One capability of the integrated console is the recording of real-time video programming from a cable or broadcast signal for later viewing by a user. Video programming creates very large data files, and therefore the console has a limited amount of capacity to store programming. A user records six favorite shows per week for later viewing, but also desires to keep several of the recorded shows each week for later re-viewing. Each week the system user inserts a backup disc into the console to backup the saved programming. Once inserted into the DVD drive the backup disc is read and the backup process executes automatically. The console may prompt the user for selection of media types, or may be preconfigured to only backup media files or video files. The backup process concludes when the video programming is transferred to the backup disc, and the disc is then ejected. The same backup disc may be used repeatedly until the disc is full. The weekly video programming is therefore stored to the backup disc creating an archive of programming for later viewing, and simple media management is accomplished. The user may then record over the shows recorded to the console.

In another example, an office worker performs a weekly computer backup. The worker inserts a backup disc into the computer. The backup disc is read, and executes the backup process. The backup process transfers the entire data contents of the computer, except for operating system information. A robust and reliable copy of the computer contents are recorded to the backup disc in case of catastrophic data loss on the computer. The computer is burned up in a fire the next week. A second computer with a complete operating system and having a restore program loaded may then read the backup disc and recover the entire contents of the lost computer.

While the preferred embodiments of the invention have been shown and described, numerous variations and alternative embodiments will occur to those skilled in the art. Accordingly, it is intended that the invention be limited only in terms of the appended claims.

## Claims

1. A method of archiving data in a computer to a high-density optical backup disc comprising:
reading (320) an executable command (121) from a back-up disc (100);
determining (340) data (131) to be stored to the back-up disc (100) responsive to said executable command (121);
transferring (360) the determined data (131) to the backup disc (100) for storing said determined data (131) to the backup disc (100); and
identifying (380) the determined data (131).

2. The method of claim 1 wherein the backup disc (100) is read (320) after insertion into a compatible disc drive (260) of a computer (200).

3. The method of claim 2 wherein the backup disc (100) is selected from the group consisting of a DVD-R, a DVD-RW, DVD+RW and a recordable blue-laser DVD.

4. The method of claim 2 wherein determining (340) data to store to the backup disc (100) comprises selecting data (131) for storing that has not been identified (380) as transferred (360).

5. The method of claim 4 wherein only media files are selected for storing.

6. The method of claim 5 wherein only video files are selected for storing.

7. The method of claim 2 wherein transferring the data to the backup disc (100) includes writing the data to the backup disc.

8. The method of claim 7 wherein the backup disc (100) is ejected when the disc (100) is filled with the data (131).

9. The method of claim 8 further comprising prompting a user to insert a data empty backup disc (100) after the data-filled backup disc (100) is ejected.

10. A computer readable high-density optical back-up disc (100) containing a computer program comprising computer readable code (121) for carrying out the method according to any one of the preceding claims.

## Patentansprüche

1. Verfahren zum Archivieren von Daten in einem Computer auf einer optischen Backup-Disk hoher Dichte, wobei das Verfahren die nachfolgenden Verfahrensschritte umfasst:
- das Auslesen (320)eines durchführbaren Befehls (121) aus einer Backup-Disk (100);
- das Ermitteln (340) von Daten (131), die anlässlich des genannten durchführbaren Befehls (121) auf der Backup-Disk (100 gespeichert werden sollen;
- das Übertragen (360) der ermittelten Daten(131) zu der Backup-Disk (100) zur Speicherung der genannten ermittelten Daten (131) auf der Backup-Disk (100); und
- das Identifizieren (380) der ermittelten Daten (131).

2. Verfahren nach Anspruch 1, wobei die Backup-Disk (100) nach Einfügung in ein kompatibles Disklaufwerk (26) eines Computers (200) ausgelesen (320) wird.

3. Verfahren nach Anspruch 2, wobei die Backup-Disk (100) aus der Gruppe bestehend aus einer DVD-R, einer DVD-RW, DVD+RW und einer aufzeichenbaren Blue-Laser DVD selektiert wird.

4. Verfahren nach Anspruch 2, wobei die Ermittlung (340) von Daten zur Speicherung auf der Backup-Disk (100) das Selektieren von Daten (131) umfasst zur Speicherung, die nicht als Übertragen (360) identifiziert (380) wurden.

5. Verfahren nach Anspruch 4, wobei nur Mediendateien zur Speicherung selektiert werden.

6. Verfahren nach Anspruch 5, wobei nur Videodateien zur Speicherung selektiert werden.

7. Verfahren nach Anspruch 2, wobei die Übertragung der Daten zu der Backup-Disk (100) das Schreiben der Daten auf die Backup-Disk umfasst.

8. Verfahren nach Anspruch 7, wobei die Backup-Disk (100) ausgeworfen wird, wenn die Disk (100) mit den Daten (131) gefüllt worden ist.

9. Verfahren nach Anspruch 8, das weiterhin den Vorgang umfasst, dass der Benutzer aufgefordert wird, eine datenfreie Backup-Disk (100) einzuführen, nachdem die mit Daten gefüllte Backup-Disk ausgeworfen worden ist.

10. Eine vom Computer auslesbare optische Backup-Disk (100) hoher Dichte mit einem Computerprogramm mit einem vom Computer auslesbaren Code (121) zum Durchführen des Verfahrens nach einem der vorstehenden Ansprüche.

## Revendications

1. Procédé d'archivage de données d'un ordinateur sur un disque de sauvegarde optique à haute densité, comprenant :
la lecture (320) d'une instruction exécutable (121) sur un disque de sauvegarde (100) ;
la détermination (340) des données (131) à stocker sur le disque de sauvegarde (100) en réaction à ladite instruction exécutable (121) ;
le transfert (360) des données déterminées (121) sur le disque de sauvegarde (100) pour stocker lesdites données déterminées (131) sur le disque de sauvegarde (100); et
l'identification (380) des données déterminées (131).

2. Procédé suivant la revendication 1, dans lequel le disque de sauvegarde (100) est lu (320) après insertion dans un lecteur de disque compatible (260) d'un ordinateur (200).

3. Procédé suivant la revendication 2, dans lequel le disque de sauvegarde (100) est sélectionné parmi le groupe formé d'un DVD-R, DVD-RW, DVD+RW et d'un DVD à laser bleu inscriptible.

4. Procédé suivant la revendication 2, dans lequel la détermination (340) des données à stocker sur le disque de sauvegarde (100) comprend la sélection pour le stockage des données (131) qui n'ont pas été identifiées (380) comme transférées (360).

5. Procédé suivant la revendication 4, dans lequel seuls des fichiers multimédia sont sélectionnés pour le stockage.

6. Procédé suivant la revendication 5, dans lequel seuls des fichiers vidéo sont sélectionnés pour le stockage.

7. Procédé suivant la revendication 2, dans lequel le transfert des données sur le disque de sauvegarde (100) comprend l'écriture des données sur le disque de sauvegarde.

8. Procédé suivant la revendication 7, dans lequel le disque de sauvegarde (100) est éjecté lorsque le disque (100) est rempli de données (131).

9. Procédé suivant la revendication 8, comprenant en outre le fait d'inviter un utilisateur à insérer un disque de sauvegarde vierge de toute donnée (100) après éjection du disque de sauvegarde rempli de données (100).

10. Disque de sauvegarde optique à haute densité assimilable par ordinateur (100) contenant un programme informatique qui comprend un code assimilable par ordinateur (121) destiné à exécuter le procédé suivant l'une quelconque des revendications précédentes.
